# EUROPEAN PATENT SPECIFICATION

(11) **EP 1 964 936 B1**
(45) Date of publication and mention of the grant of the patent: **10.04.2013**
(21) Application number: 08425087.7
(22) Date of filing: 13.02.2008
(51) Int. Cl.: C22B 11/00, C22B 3/00, C22B 3/20, C22B 7/00, C22B 15/00

(54) **Process for recovering noble metals from electric and electronic wastes**
Verfahren zur Rückgewinnung von Edelmetallen aus elektrischem und elektronischem Abfall
Procédé pour la récupération de métaux nobles à partir de déchets électriques et électroniques

(30) Priority: 13.02.2007 IT RM20070073
(43) Date of publication of application: 03.09.2008
(73) Proprietor: Sardegna Ricerche, 09123 Cagliari (IT)
(72) Inventor: Deplano, Paola, 09123 Cagliari (IT); Mercuri, Maria Laura, 09123 Cagliari (IT); Pilia, Luca, 09123 Cagliari (IT); Serpe, Angela, 09042 Monserrato (CA) (IT); Vanzi, Massimo, 09123 Cagliari (IT)
(74) Representative: Santi, Filippo

(56) References cited:
- EP-A- 1 457 577
- WO-A-2005/100621
- US-A- 4 261 738
- CAU L ET AL: "New powerful reagents based on dihalogen/N,N'-dimethyl-perhydrodiazep ine-2,3-dithione adducts for gold dissolution: the IBr case" DALTON TRANSACTIONS, RSC PUBLISHING, CAMBRIDGE, GB, 1 January 2003 (2003-01-01), pages 1969-1974, XP002336856 ISSN: 1477-9226
- F. BIGOLI ET AL.: "A powerful new oxidation agent towards metallic gold powder: N,N'-dimethylperhydrodiazepine-2,3-dithion e(D) bis(diiodine). Synthesis and X-raytructure of [AuDI2]I3" CHEMICAL COMMUNICATIONS, vol. 2, 1998, pages 2351-2352, XP002482630 Basel, Switzerland
- SUM E Y L: "THE RECOVERY OF METALS FROM ELECTRONIC SCRAP" JOM, SPRINGER, BERLIN, DE, vol. 43, no. 4, 1 April 1991 (1991-04-01), pages 53-61, XP000249799 ISSN: 1047-4838

## Description

The present invention concerns a process for recovering noble metals from electric and electronic waste.

More in particular the invention relates to the field of the recovery of noble metals such as in particular gold and copper contained in electric and electronic waste such as smart cards, printer cartridges and electronic cards.

It is known that in industrial sectors such as that of electrics and electronics large use is made of metallic materials because of their chemical-physical features and in particular that, among all metals, the preferred ones are those having particular features of electric conduction, workability and resistance to chemical etching. In particular, if, on one hand gold is an ideal material for electric connections, since it is not only an excellent electric conductor, but it has also good features of malleability and ductility (thus allowing its reduction into plates or wires), and it cannot be attacked by most acids, on the other hand the high cost thereof limits somehow its use, leaving wide room to the use of copper, which is easy to work and mouldable in wires, and is further provided with high electric conductivity and limited costs.

In the realisation of electric and electronic components, some other elements stand beside these two metals, such as silver, lead, aluminium, zinc, chromium, manganese, iron, cobalt, zirconium, cadmium, palladium, tantalium, silicium, etc., from time to time present or not in variable percentages according to the kind of component and its features.

It is evident that the selective recovery of noble metals contained in electric and electronic components would not only be a valid form for recycling used materials, as requested by the European Legislation about waste (Directive 91/156/CE applied in Italy through the Ronchi Decree, D. L. 97/22) and, in particular, Electric and Electronic Devices Waste (Rifiuti da Apparecchiature Elettriche and Elettroniche RAEE: Directive 2002/96/CE, applied in Italy Through the Law Decree No. 151 of 25^{th} July 2005), but in perspective could turn out to be also economically profitable, in particular as far as the selective recovery of gold is concerned.

Processes in use at present for recovering gold contained in electric and electronic components provide for melting or dissolving the whole part to be treated, respectively by treatments at high temperature in the presence of mixtures of oxidising gases (pyrometallurgic chlorination) or treatment with mixtures of strong and oxidising acids (acid dissolution), and following selective recovery of the metals from the complex matrix.

However, such processes present some drawbacks, since said treatments at high temperature in the presence of mixtures of oxidising gases turn out to be not only expensive but also toxic very often and since the strong and oxidising acids that are needed for the acid dissolution are aggressive and/or toxic.

A recent approach (F. Bigoli, P. Deplano, M.L. Mercuri, M.A. Pellinghelli, G. Pintus, A. Serpe, E.F. Trogu, A powerful new oxidation agent towards metallic gold powder: N,N'-dimethylperhydrodiazepine-2,3-dithione (D) bis(diiodine). Synthesis and X-ray structure of [AuDI2]I3, Chem.Commun,1998, p. 2351-2352) based on the use of diiodic adducts of N,N'-dimethylperhydrodiazepine-2,3-dithione (or, more synthetically, Me₂dazdt·2l₂), having formula: 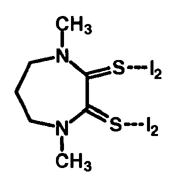 allowed for the development of a new class of reactans both oxidising and complexing, non cytotoxic and selective towards the oxidation reaction of gold, that consent to direct the research towards processes for recovering gold that are simple, environmentally compatible and at the same time efficient.

Subsequently (L. Cau, P. Deplano, L. Marchio, M.L. Mercuri, L. Pilia, A. Serpe, E.F. Trogu , J. Chem. Soc., Dalton Trans, 2003, p. 1969-1973; A. Serpe, F. Bigoli, M.C. Cabras, P. Deplano, P. Fornasiero, M. Graziani, M.L. Mercuri, T. Montini, L. Pilia, E.F. Trogu, Chem. Commun., 2005, p. 1040 and following), other similar compounds were synthetised and caracterised, in particular having formulas Me₂dazdt·2IBr and Me₂dazdt·IBr. These reactans also proved to be highly recommended for coordinating and oxidising gold.

More in general, the research allowed to select a new kind of reactants for coordinating and oxidising gold in the class of adducts with halogens of N,N'-dialkilperhydrodiazepine-2,3-dithione, more synthetically identified with the formula (1)

R,R'dazdt·nX₂ (1)

wherein:
R and R' are the same or different alkyls,
X₂ are the same halogen or interhalogen, and
N is 1 or 2.

In order to effectively use the abovementioned reactants for extracting gold from RAEE, it is needed to properly prepare the samples to be treated, since they are constituted by a variously complex structure wherein not only gold is present together with other metals from which it must be insulated and extracted, but it is also present a high percentage of plastic materials, with the function of supporting the structure, the presence of which can pollute the final product and which would preferably be previously removed.

In this context is presented the solution according to the present invention the aim of which is to present, on the base of a careful study of the components characterising different kinds of electric and electronic waste, a process of selective recovery of noble metals contained in waste by means of methods that are simple, environmentally compatible and at the same time efficient.

The process aims at recovering noble metals, in particular gold, and optionally copper, contained in electric and electronic waste, by means of dissolution with synthesis reactants having both an oxidising and complexing function in the same molecule, after the removal of non-metallic interferences and the selective dissolution of metals having a lower oxidation potential, and subsequent recovery of the noble metals from the solutions in which they are contained and recovery of the synthesis reactant.

The purpose of the present invention is therefore that of providing for a process for recovering noble metals from electric and electronic waste consenting to overcome the limits of the processes according to the prior art and to obtain the technical results previously described.

A further aim of the invention is that said process can be performed assuring absolute safety for the personnel in charge of its execution. Further, the correct design of an *ad-hoc* plant for the production of reactants on an industrial scale, should allow for contained operation costs.

Not last aim of the invention is that of realising a process that is substantially simple, safe and reliable.

It is therefore a first specific object of the present invention a process for recovering noble metals from electric and electronic waste as defined in claim 1.

Further features of the process, and further objects of the present invention are defined in the following claims 2-17.

The invention will be described in the following for illustrative, non-limitative purposes, with particular reference to some illustrative examples and to the figures of the enclosed drawings, wherein:
- figure 1 shows a calibration line for determining the amount of copper contained in the solutions collected after a step of extraction of copper performed using NH₃/(NH₄)₂SO₄/H₂O₂ (Example 5), analyzed by spectrophotometry (by means of a UV-Vis Cary 5 Varian spectrophotometre), studying the absorbance of the peak at 616 nm of the samples under examination,
- figure 2 shows the operation diagram of the method for recovering copper from the extraction solutions derived from the treatment of selective dissolution of the metals contained in electric or electronic waste,
- figure 3 shows the morphologic characterization obtained by means of a scanning electronic microscope of a sample of copper recovered from ink cartridges for ink-jet printers, through reduction with metallic zinc,
- figures 4 and 5 show the morphologic characterization obtained by means of a scanning electronic microscope of a sample of gold recovered from ink cartridges for ink-jet printers, through reduction with metallic magnesium, with a magnification of 3000x.

### Example 1. Characterization of different kinds of electric and electronic waste. Characterization of SIM cards

The characterization of electronic waste, with the aim of a subsequent and systematic recovery of gold, requires a deep knowledge (possibly appraised) of the materials that are present and of their position. This task was performed by means of a preliminary analysis of the physical and chemical structure of different electronic waste of particular interest, selected amongst those being goods of daily use and having a limited physical bulk (such as for example smart cards and in particular SIM cards for cell phones), and being part of a very high percentage of electronic waste (such as for example printer cartridges). In the foregoing the characterizations of the following electronic waste will be presented: SIM cards, printer cartridges, motherboards and network cards of electronic calculators (personal computer).

In general the characterization process is composed, for each kind of electronic waste, of two steps: the first consisting of a complete physical characterization of the device, and the second providing for an analysis of the materials by which it is made.

The first kind of electronic waste that was analysed are telephone SIMCARDs. SIMCARDs belong to the group of SMART cards and have all the same structure wherein an electronic module is embedded in a plastic support having a set form. Even if they leave free to shape the visible surface of the electronic module, ISO norm 7816 define the number of electric contacts, their distances and their minimal dimensions.

A hollow space in the plastic support as the function of a seat for the electronic module that is embedded in the hollow space and fixed by means of an adhesive resin. The resin has also a protection function for the active microelectronic part (chip) and and for its connection wires. Neither the plastic support, nor the resin contain some kind of metal. As far as the presence of metals is concerned, the electronic module presents metals both on its external surface, as can be seen with the naked eye, and on its internal surface, as can be observed only after the removal of the module from the plastic support and the removal of the resin.

Dipping the SIMCARD in hot acetone the support is removed, whereas an etching with nitric acid grants the removal of the capsule made of resin and also of metals such as copper and nickel. However, in this case and for this kind of devices, this kind of etching turns out to be very efficient, since it does not etches gold. External and internal contact areas are therefore covered with gold.

The mechanical section of SIMCARDs showed the position of three main metals composing it (gold, copper and nickel), in particular showed that gold constitutes the more external layer, covering an intermediate layer of nickel, in its turn surrounding copper. Further, gold constitutes all the internal and external contact.

As far as the rest of the SIMCARD is concerned, the chip is an aluminium layer, covered by passivation glass (Si₃N₄ or SiO₂); differently, the substrate of the chip contains monocrystalline silicium. The absence in the chip of any materials of some interest for the present invention makes its further characterization irrelevant. Table 1 shows an estimate of the amount of gold contained in the SIMCARD.

**Table 1**

| | Total finishes surface - Wires section (cm²) | Finishes thickness - Total length of the wires (cm) | Total volume (cm²) |
|---|---|---|---|
| External finishes | 1,5 | 0,25 · 10⁻⁴ | 3,8 · 10⁻⁵ |
| Internal finishes | 0,025 | 14 · 10⁻⁴ | 3,5 · 10⁻⁵ |
| Wires | 7 · 10⁻⁶ | 0,15 | 5,3 · 10⁻⁶ |
| Totale | | | 7,8 · 10⁻⁵ |
| | | | (1,5 mg) |

Estimates obtained by this way turn out to have a purely indicative nature

### Example 2. Characterization of different kinds of electric and electronic waste. Characterization of ink cartridges for ink-jet printers

Onether kind of waste taken under examination is the cartridge for ink-jet printer.

The structure and technology of these cartridges turn out to be approximately the same independently from the manufacturer, being different only for physical features such as the geometry of the contacts and the dimensions of the chip.

In fact, the printer cartridge is generally constituted by a cover made of plastic material containing ink (or three inks: red, green and blue in case of a color cartridge), a tab made of plastic material, acting as a support for the wires and metallic contacts, and the chip containing the nozzles from which ink is ejected (one for black ink cartridges and three for color ones).

The sole parts that can contain metals and therefore gold, are the plastic tab and the chip. The tab consists of two strips made of plastic material. One of these is in contact with the ink containing cover and on this strip wires and metallic contacts are placed connecting the printer head with the ink nozzles. The second, the more external one, covers these wires, leaving uncovered, for obvious reasons, the metallic contacts. The analysis of the tab consists in the physical and chemical characterization of the wires and the metallic contacts, and was performed in two ways:
- physical cut of the wires and metallic contacts, and
- analysis of their metallic composition.

As far as the second way is concerned, after cutting and chemically analizing the materials, the presence of gold could be verified both, as obvious, in the contacts, and in the wires. The contact is constituted by three layers, two of which are made of gold and one is made of copper. The external gold layer corresponds to the exposed part of the contact and, for this reason, has a greater thickness then the other gold layer, in contact with the internal plastic strip. Copper is positioned between these two layers. Differently, the wire is constituted by two layers, one made of gold and one made of copper. The gold layer corresponds to the part in contact with the internal plastic strip, while there is not any layer in contact with the external strip. The remaining part of the wire is constituted by copper.

It was possible to verify that, even if the geometrical disposition of the contact and the metallic wires metallici is slightly different, the technology, in terms of used metals and their thickness, is the same for all the samples put under examination.

On the contrary, as far as the chip is concerned, it is glued directly with the ink containing plastic cover and it is in contact with the metallic wires sending electronic control signals to nozzles. After having removed the plastic tab and having cut the plastic cover in the area surrounding the chip, in such a way that a minimum amount of plastic is left, subsequently completely removed by means of a chemical attack based on nitric acid, it was possible to perform the analysis with an electronic microscope and therefore the chemical characterization of metals contained in the chip.

As far as the estimate of gold contained in the cartridges is concerned, gold contained in the wires and chip was considered as being irrelevant and only that placed on the external contacts was taken into account. Table 2 shows an estimate of the amount of gold contained in a black ink cartridge for ink-jet printer (Hewlett-Packard technology, model HP15 black).

**Table 2**

| HP15 black | |
|---|---|
| Contact area | 2,25·10⁻² cm²² |
| Contact gold thickness | 2,4·10⁻⁴ cm |
| Contact gold volume | 5,4·10⁻⁶ cm³ |
| Total (mg) (52 contacts) | ~ 5,4 mg |

The analysis made by means of the electronic microscope SEM applied to color cartridges for ink-jet printer (Hewlett-Packard technology, model HP78 color) showed the same structure and metal content then those of black ink cartridges.

### Example 3. Characterization of different kinds of electric and electronic waste. Characterization of printed cards of electronic calculators

The third kind of electronic waste put under examination was that comprising cards mounted on desktop PCs. In this section a certain kind of motherboards and network cards is characterized for detecting parts containing gold. Both kinds of cards are constituted by a substrate made of fibrous material over which metallizations are laid, a layer made of passivating plastic material and an assembly of electronic devices more or less complex such as chips, condensers, slots (in case of motherboards), external contacts and internal contacts (useful for connecting with external peripherals, hard disks or other internal cards). The components of interest of the invention are obviously internal and external contact zones (where it is probable to find gold) and metallizations inside the substrate.

The analysis of the motherboard and the network card consists in the physical and chemical characterization of the slot and the metallizations inside the substrate and was performed by means of a physical section of the substrate and an analysis of the metallic composition of the substrate and the slots. As far as the slots is concerned, after removing them from the motherboard and extracting metallic contacts from them an EDS (Energy Dispersion Spectrometry) analysis was performed. They are constituted by a plastic material containing inside the contacts for the electric communication with the cards. A little part of these contacts is obviously exposed, while the remaining part is included inside the plastic material. Metals contained therein are gold (only in the parts that effectively will be in contact with the other cards), nickel, copper and traces of tin and lead (presumably due to welding processes) are present.

In this case also most of the gold is contained in external contacts. The thickness can be compared to that of cartridges contacts (about 2,4 µm), while the area of a contact is about 6·10⁻² cm². As a consequence, the volume for a single contact will be 1,44·10⁻⁵ cm³. Considering that the number of contacts is, as an everage, about forty, the amount of gold contained in a network card is about 10 mg.

### Example 4. Pre-treatments necessary for the removal of possible interfering materials that are present in SIM cards

As it can be understood by the characterization (Example 1), all SIMCARDs exhibit the same structure wherein an electronic module is inserted in a plastic support having a set form. The electronic module is fixed to the plastic support by means of a resin. The plastic support and the resin does not contain any kind of metal.

The analysis of the electronic module performed with a SEM (Scanning Electron Microscope) showed that besides gold, also copper and nickel are present in a appreciable amount. The succession of metallic layers (Au-Ni-Cu-Ni-Au) allows metals with the lower reduction potential , thus easier to oxidize, to be found inside the device.

The plastic support on which the electronic module is fixed can disturb the process of recovery of gold since it is partially soluble in those organic solvents that demonstrated to be more suitable for performing the etching for recovering such a metal. A preliminary treatment, set-up by the inventors, thus provides for a hot washing of the piece with acetone, during which such a support partly melt and/or change of consistency (it softens).

It is possible to follow two different approaches. According to the first approach, the SIMCARD is treated as a whole with hot acetone in such a way that the detachment of the support from the electronic module, in this case mechanically (manually), is made easier. According to the second approach, preferred in the present invention, the SIMCARD is ground (on a laboratory scale, cut in pieces of little dimensions) and subsequently treated with hot acetone. In this way the detachment of the plastic material of the support from the metallic material of the electronic module occurs spontaneously and plastic softened by the etching is removed together with the solvent. A further advantage linked with the grinding is that of exposing metals having a low reduction potential with respect to the subsequent etching, increasing the velocity of the dissolution process.

### Example 5. Selective dissolution of the different metals. SIM cards

Before proceeding with the etching and recovery of gold, it is necessary to remove in a selective way other metals of the device, in the specific case nickel and copper, since this metals can react with the reactant selected for the oxidation of gold giving:
a) a mixed solution of the three complexed metals that would require laborious processes of separation and recovery of the same;
b) a useless consumption of synthesis reactants, when for these metals that can be oxidised more easily it would be possible to use less expensive methods. Further, having considered the revaluation of the price of copper and, in general, of metals, it was decided to set-up also a method for recovering metallic copper.

The treatment set-up for the dissolution of copper is based on the use of an oxidising agent (H₂O₂) in presence of a complexant (NH₃) promoting the oxidation process. The reaction occurs amongst the ground electronic module, deprived of the support plastic, NH₃ at a concentration of 30% (that can be also used diluted with water) in presence of (NH₄)₂SO₄, repeatedly adding H₂O₂ at a volume concentration of 28% (for this purpose a dripper was used) at ambient temperature (the temperature slightly increases since the reaction is esothermic) and under constant agitation. The reaction,

Cu(s)+ 2NH₃+(NH₄)₂SO₄+ H₂O₂ → [Cu(NH₃)₄](SO₄) + 2H₂O

develop an intense blue color due to the formation of the complex ion [Cu(NH₃)₄]²⁺, is promoted by the addition of (NH₄)₂SO₄ and is taken on until the complete dissolution of the metallic copper (about 30 minutes). The dissolution will be the faster the smaller is the granulometry of the ground material.

At the end of the reaction, the copper containing solution is forwarded to the step of recovery of metal (Example 18) and the solid residues to the underlying step of dissolution of nickel.

For the dissolution of nickel in hydrochloric acid (solution in concentration of 37% diluted in the ratio 1:5) is used. The reaction for recovering nickel is quite slow and requires for the help of prolonged shaking and heating (about 10 hours). In this case also, the dissolution will be as faster as the granulometry of the ground material is smaller. At the end of the treatment a solution is obtained which is colored in more or less intense yellow/green, as a consequence of the formation of nickel chloride.

At the end of the reaction, solid residues are conveyed to the step of dissolution of gold (Example 6). The solution of nickel chloride can be disposed or, alternatively, metodologies of salt reuse or metal recovery can be considered.

### Example 6. Dissolution of gold present in SIM cards

II treatment set-up according to the present invention for the dissolution of gold is based on the use of one of the claimed reactants, encompassing a complexing action, due to the S,S-donor ligand, and an oxidising action, due to iodine. The reaction of dissolution of gold occurs by reacting the solid residue coming from the previous treatments, together with an excess of the aforementioned reactant in acetone (acetone was selected, since it is the less expensive and easier to handle amongst solvents identified as suitable) at ambient temperature. The reaction occurs under agitation for an entire day. The dissolution will be as faster as the granulometry of the ground material is smaller.

At the end of the reaction, solid residues are disposed, while the solution is conveyed to the step of recovery of gold (Example 19).

### Example 7. Determination of the amount of copper in solution after selective dissolution of the metal contained in SIM cards

Four samples of SIM cards were subjected to the abovementioned treatments, while three samples were deprived of the plastic support and treated with aqua regia in order to form a set reference samples.

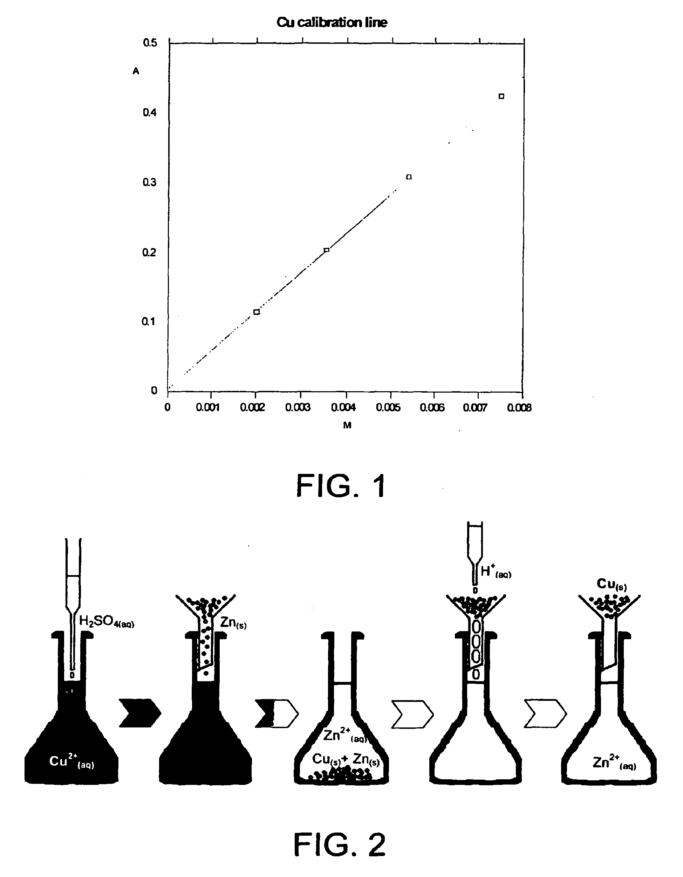

The solutions collected from the step of extraction of copper performed with NH₃/(NH₄)₂SO₄/H₂O₂, were analysed by spectrophotometry (measures taken by means of a UV-Vis Cary 5 Varian spectrophotometer), studying the absorbance of the peak at 616 nm of the samples under examination in comparison with an appropriate calibration line (Fig. 1). Spectra were considered in the range 200-800 nm, and test tube of 1 cm was used. As a comparison, solutions obtained by treatment with aqua regia were analysed by ICP/AES, with spectrometer Liberty 200 Varian. The analyses gave the following results shown in table 3:

**Table 3**

| Treatment | Amount of Cu (g) |
|---|---|
| NH₃/(NH₄)₂SO₄/H₂O₂ | 3,6·10⁻² |
| | 4,0·10⁻² |
| | 3,8·10⁻² |
| | 3,5·10⁻² |
| Average value | 3,7·10⁻² |
| Aqua regia | 3,3·10⁻² |
| | 3,7·10⁻² |
| | 3,2·10⁻² |
| Average value | 3,4·10⁻² |

Taking into consideration that the average weight of SIMCARDs is about 400 mg, it is possible to evaluate that the weight percentage of copper is equal to 10% of the total amount.

### Example 8. Determination of the amount of nickel in solution after selective dissolution of metal contained in SIM cards

The amount of nickel was characterized by means of ICP/AES analysis of the solutions directly obtained from the treatment of SIMCARDs with diluted HCl or with aqua regia.

L'ICP/AES analysis gave the results listed in the following table 4:

**Table 4**

| Treatment | Amount of Ni (g) |
|---|---|
| HCl dil. | 2,7·10⁻³ g |
| | 5,4·10⁻³ g |
| | 3,0·10⁻³ g |
| | 2,6·10⁻³ g |
| Average value | 3,4·10⁻³ g |
| Aqua regia | 3,5·10⁻³ g |
| | 3,3·10⁻³ g |
| | 4,1·10⁻³ g |
| Average value | 3,6·10⁻³ g |

Considered that the average weight of SIMCARDs is about 400 mg, it is possible to estimate that the weight percentage of nickel is 1 % of the total amount.

### Example 9. Determination of the amount of gold in solution after selective dissolution of the metal contained in SIM cards

For analytical purposes, the solutions collected after the etching on the SIMCARDs (examples 5 and 6) underwent a disgregation with concentrated acids (HNO₃, H₂SO₄, HCl). Such preliminary passage to the analytic measure can often cause an error (underestimation) of determination. In order to evaluate if some loss happened in the different passages, three SIMCARDs were used as reference, treating them, rather than together with the adduct, with aqua regia. In this way, the solutions obtained directly went to the analysis without undergoing further treatments.

The subsequent analysis of the solutions by means of ICP/AES gave the results shown in table 5:

**Table 5**

| Treatment | Amount of Au (g) |
|---|---|
| Aqua regia | 4·10⁻⁴ |
| | 4·10⁻⁴ |
| | 5·10⁻⁴ |
| Average value | 4·10⁻⁴ |

Taking into consideration the data related to gold it was possible to ascertain that the values obtained in the case of solutions treated with one of the adducts were lower than those related to solutions in aqua regia. Such a phenomenon could depend on the fact that the analytic determination of gold in the organic solution of the complex requires a industrious treatment of the sample (evaporation, disgregation, transfer of the residual solution in a volumetric flask), causes an addition of errors on the total amount of estimated gold.

Taking into consideration that SIMCARDs average weight is about 400 mg, it is possible to estimate that weight percentage of gold is 0, 1 % of the total amount.

### Example 10. Necessary pre-treatments for the removal of possible interfering materials in ink cartridges for ink-jet printers

Cartridges taken into consideration for this example are of two types and precisely HP 15 (black) and HP 78 (color). A qualitative study about the treatment of structurally similar cartridges, was performed with Lexmark cartridges.

This kind of cartridges is constituted by: an ink containing cover made of plastic material, a tab made of plastic material functioning as a support for metallic contacts and a chip that contains ink erogation nozzles.

The only parts that contain metals are the tab and the chip, therefore the chemical treatment was performed only on these part. The analysis with SEM (Scanning Electron Microscope) established that beside gold copper is present, in a appreciable amount. Such analysis further signals that, although the disposition of the contacts is slightly different for black and color cartridges, the technology, in terms of used metals and their thickness, is the same. Therefore it was supposed and subsequently verified that the amount of Au and Cu obtained by the treatments are the same for both kinds of cartridges.

Tab and chip are mechanically divided from the plastic ink-container that was sent to disposal, and washed of possible ink residues. In particular, in HP cartridges, the tab was easily manually removed while the chip was treated by sectioning the end part of the cartridge. In the case of Lexmark cartridges, on the contrary, by manually removing the tab, the metallic contacts remain integral with the plastic ink-container and it is consequently necessary to remove the tab and the contacts by melting with cold acetone the adhesive that keeps contacts stuck with the ink-container.

After washing the selected material with water and acetone, two different approaches were followed.

In the first, the pieces where treated as a whole.

In the second, the tab was ground (on a laboratory scale, cut in small pieces). The advantage due to the grinding is that of exposing copper to etching, increasing the velocity of the dissolution process.

First, tests were made with different solvents (acetone, THF in hot conditions) in order to remove the glue used to make the tab adhere to the cartridge, since it could interfere with the following operations and even increase the metals exposition to the chemical etching. The solvent that gave the best results was hot THF. However, after various tests, such a treatment turns out to be irrelevant and therefore was removed.

### Example 11. Selective dissolution of the different metals. Ink cartridges for ink-jet printers

In the same way as for SIMCARDs, before proceeding with etching and recovery of gold, it is necessary to remove in a selective way the other metals that are present, in this case mainly copper. In this case also the recovery of metallic copper was subsequently performed.

The treatment performed on the cartridges is the same described for the SIMCARDs of the example 5. In this case time needed for the dissolution of copper was about 1 hour.

At the end of the reaction, the copper containing solution was conveyed to the step of recovery of metal (Example 18) and solid residues to that of dissolution of gold (Example 12).

### Example 12. Dissolution of gold of the ink cartridges for ink-iet printers

In this case also the treatment set-up for the dissolution of gold provides for the use of one of the selected reactants, in a similar way as previously seen. The reaction occurs under agitation for about 6 hours.

At the end of the reaction, solid residues are disposed, while the solution is conveyed to the step of recovery of gold (Example 19).

### Example 13. Determination of the amount of copper in solution after selective dissolution of the metal contained in ink cartridges for ink-jet printers

Tests were performed first on metals in powder and after on a set of eight actual cartridges samples (six of which were HP15 black and three HP78 color), seven having been treated as described with reference to previous examples. The solutions obtained by four of these examples were analysed for the quantitative determination of metals, while those obtained by the three remaining examples were treated for recovering metals.

A sample was treated with aqua regia.

Amongst the obtained solutions, five were analysed by spectrophotometry through a UV-Vis Cary 5 Varian spectrophotometer, and one by ICP/AES analysis for the crossed characterization of the amount of copper.

The analyses gave the results summarized in table 6:

**Table 6**

| Treatment | Amount of Cu (g) |
|---|---|
| NH₃/(NH₄)₂SO_{4/}H₂O₂ | 0,12 |
| | 0,11 |
| | 0,11 |
| | 0,15 |
| Average value | 0,12 |
| Aqua regia | 0,10 |

### Example 14. Determination of the amount of gold in solution after selective dissolution of metal contained in ink cartridges for ink-jet printers

The obtained solutions, with the exception of that obtained by etching with aqua regia, underwent a disgregation with concentrated acids. The analysis on such solutions was performed by means of an investigation of the kind ICP/AES and provided for the result shown in table 7:

**Table 7**

| Treatment | Amount of Au (mg) |
|---|---|
| Aqua regia | 4,2 |

During the analysis ICP/AES the absence of tantalium was noted, which is a metal that is present inside the chip.

The evaluation of the obtained results allows to conclude that it is possible to remove the passage of the bath in hot THF since it does not affects the recovery of metals.

Further, by observing data relating to copper and gold, it was made possible to confirm that the amount of metals is the same for black ink and color cartridges.

Considered that the average weight of an exhausted HP15 black cartridge is about 70 g while that of a tab (comprised of the chip) is about 350 mg, it is possible to estimate that the weight percentage of metals respectively present in the cartridge and in the tab (and chip) is: Au ~ 0,01 %, Cu ~ 0,2% and Au ~ 2%, Cu ~ 40%.

Further, it was possible to come to the conclusion that, from an industrial viewpoint, it is possible to treat at the same time SIMCARDs and ink cartridges, since treatments identified for these two kinds of electronic waste does not interfere but can become intergrated. In fact, the "bath" in hot acetone, which is necessary in order to weaken the plastic support, does not have any effect on the cartridges tabs; at the same way, the treatment with diluted HCl for recovering Ni from the SIMCARDs, does not have any consequences on the cartridges. Finally, other treatments, such as recovery of Cu and Au, are very similar.

### Example 15. Necessary pre-treatments for the removal of interfering materials that are present in the printed cards of electronic calculators

The cards that were subjected to characterization as examples representative of the class of the electronic cards were of two types: samples of network cards and modem. However, a person skilled in the art can understand that the results that were obtained can be extended to any kind of electronic cards. The amount in metals turns out to be variable from sample to sample, however the following metals were identified always: Cu, Ag, Au, Ni, Pb, Al, Zn; traces of Cr, Mn, Fe, Co, Cd, and sometimes Pd. From the characterization it was put in evidence that gold is positioned in some parts of the card, in some cases exposed, in other cases inside of materials generally plastic materials.

The method that is considered to be useful for recovering gold, provides for the milling of the pieces, followed by a pre-treatment for the removal of the interfering materials and subsequent etching on gold.

Available samples were subsequently milled by means of a Wiley mill SKV SM 2000, thus producing a milled material wherein the fragment' dimensions are comprised between 0,5 and 4 mm. Anyway, the person skilled in the art is able of understanding that also a slightly rougher milling could be suitable.

The sample was subsequently put in contact with a magnet, in order to obtain the separation of magnetic metals that are present. Such a separation allowed for the preventive removal of some metals, such as Ni, Mn, Fe, Co.

The milled sample was subsequently subjected to washing: a) with acetone at hot conditions; b) with water at hot conditions. Both treatments allow to remove substances that are soluble in both solvents, mainly contained in the plastic support, or dispersed therein, and the thinner and lighter part of the milled material constituted by non metallic materials.

### Example 16. Selective dissolution of the different metals. Printed cards of electronic calculators

The dissolution of the metals that are present in the cards can be made through the steps described hereinbelow:
a) treatment, selective towards metals having a negative oxidation potential, that is mainly the following metals that are present in variable proportions (account being taken also of the partial removal performed according to the previous treatments) in the different samples: Ni, Pb, Al, Zn, Sn and traces of Fe, Co, Cr and Cd, provides for the chemical reaction of the milled material and a solution of HCl (HCl 37% diluted 1:5 - 1:1) in an inert atmosphere (N₂ or Ar) for a variable amount of time depending on the quantity and quality of the metals contained and of the temperature (variable in a range that is comprised between ambient temperature and the boiling point of the solution), subjecting the concentration of the metallic species to monitoring until they result in a constant value. Etching produces the dissolution of most of the listed metals and a slight precipitation of the products that are not very soluble.
b) the dissolution of copper and silver and other metals possibly residual of the previous treatment by means of a chemical reaction amongst the milled material and a solution of NH₃ (range of concentration: diluted 1:5 - concentrated) to which (NH₄)₂SO₄ in excess is added and, under drop by drop agitation, a solution of H₂O₂ (10 - 30 vol), at ambient temperature (the solution slightly becomes hotter as an effect of the reaction). As a consequence of the reaction with copper, the solution rapidly change its color and turns to a blu intense. Time and costs of the reactions are variable depending on the amount and granulometry of the metals that are present and of the concentration of reactants. Anyway, the reaction goes on until the stabilization of the concentration of metallic species in solution. By etching the dissolution of a great part of the listed metals and a slight precipitation of product not so soluble solubili.
c) separation by means of filtration of the solution, which is conveyed to the treatment for the recovery of copper (as shown in example 18), from the residual solid, which is in turn subjected to a washing with a solvent selected amongstra acetone, methylethylketone, acetonitrile and tetrahydrofuran and conveyed to the step of dissolution of gold (example 17).

### Example 17. Dissolution of gold in the printed cards of electronic calculators

Such a treatment is performed on the solid residue of the milled material together with a solution of the common organic solvents (acetone, methylethylketone, acetonitrile, tetrahydrofuran) of one of the reactants listed below:
a) Adducts with halogens of non cyclic dithioxamides of formula (2):

   Rₘ,Rₘ'DTO·nX₂ (2)

   wherein:
   R and R' are the same or different alkyls or aryls,
   X₂ are the same halogen or inter-halogen,
   m IS 1 or 2, and
   n is 1 or 2.

For the purposes of the invention the groups R and R', that are the same or different, can be appropriately modified in order to improve selectivity and/or solubility of the reactant in polar solvent such as water and they are preferably short chain alkyls or aryls and more preferably they are the same and are methyls, while X₂ is preferably selected from the group consisting of I₂, IBr, ICI, Br₂ and more conveniently they are I₂.

Such reactants (in particular for R=R'=Me, X₂=I₂) proved to be able to rapidly dissolve gold in common organic solvents already at ambient temperature.
b) adducts with halogens of tetralkylthiuram disulphide (Bis(diethylthiocarbamoyl)disulphide) of formula (3) 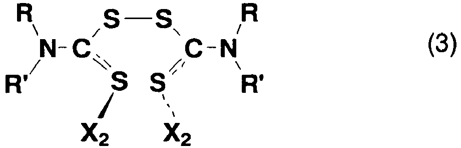 wherein:
   R and R' are the same or different alkyls or aryls, and
   X₂ are the same halogen or inter-halogen.

For the purposes of the invention groups R and R', that are the same or different, can be appropriately modified in order to improve selectivity and/or solubility of the reactant in polar solvent such as water and they are preferably short chain alkyls or aryls and more preferably they are the same and are ethyl, while X₂ is preferably selected from the group consisting of I₂, IBr, ICI, Br₂ and more conveniently they are I₂.

Such reactants (in particular for R=R'=Et, X₂=I₂) are able to rapidly dissolve gold in common organic solvents already at ambient temperature.
c) adducts with halogens of dimorpholinthiuram disulphide (Bis(morpholinthiocarbamoyl) disulphide) with morpholine as the only substituent of the nitrogens, having formula (4) 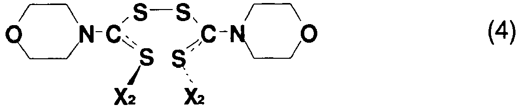 wherein X₂ are the same halogen or inter-halogen.

The last class of compounds reacts with gold according to the following scheme of reaction.

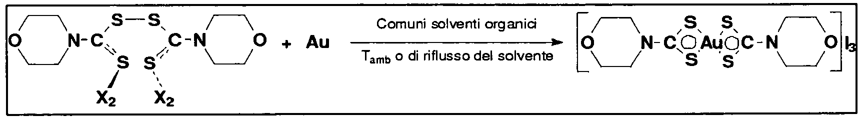

At the end of the reaction, the solid residues are disposed, while the solution is conveyed to the step of recovery of gold (Example 19).

### Example 18. Recovery of copper in solution after selective dissolution of the metal contained in electronic waste and determination of its amount

The recovery of metallic copper and gold from the extraction solutions, as shown in the present and in the following example, was performed with respect to the solutions resulting from the etching of three ink cartridges for ink-jet printers and in particular two cartridges of the kind HP 15 black and one cartridge of the kind HP 78 color. Those skilled in the art understand that said step of recovery of metallic copper and gold is also applicable to extraction solutions resulting from treatment of different kinds of electric or electronic waste.

The method for the recovery of copper consists in promoting the reduction of copper contained in the aqueous solution of [Cu(NH₃)₄](SO₄) (as obtained according to example 11) through acidification with diluted sulfuric acid and addition of an excess of Zn in powder form (according to the scheme of figure 2). The solid zinc in excess is easily removed by addition of a diluted acid (H₂SO or HCl).

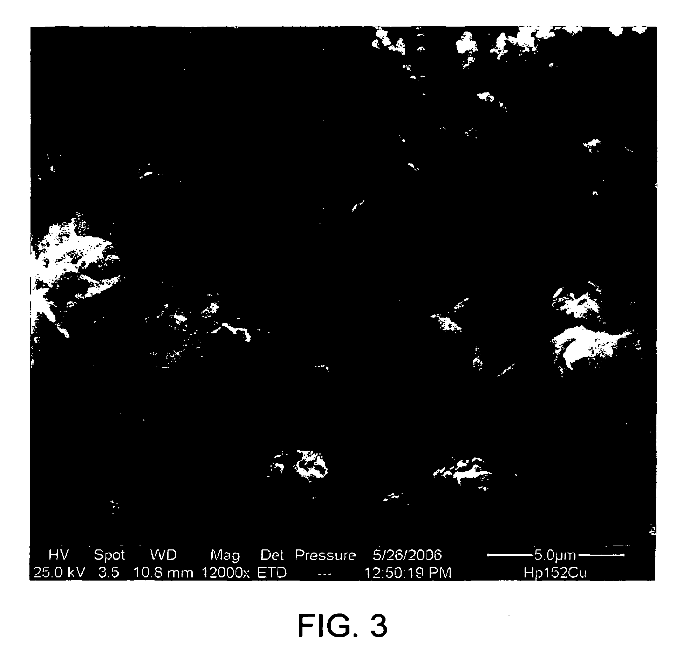

The amount of metal that was recovered in the experimental tests ranges between 100 and 170 mg. Taking into consideration the amount of metal that was obtained and the quasi complete discolouration of the solution, the yeld of recovery of copper can be considered as about quantitative. The data relating to the higher content of copper (166 mg) is slightly higher then the maximum limit of the range defined through the previous analyses (as according to example 13). In order to verify the amount of metal obtained, in terms of purity, dimensions and omogeneity of the particles, a characterization of the abovesaid sample was performed, by means of energy dispersion spectrometry of the scanning electonic microscopy. Figure 3, obtained with a SEM, shows the morphology of the sample under exam: average dimensions of the particles turns out to be substantially uniform and in the rank of some hundreds of nm (~500nm). Through a microanalythic investigation it is established that the analyzed sample is composed of metallic copper (~85%) and a residual amount of Zn (~15%). Taking away from the total amount of obtained metal the amount of Zn still present, the amount of copper recovered, ~140 mg, is comprised in the previously determined range. The residual Zn can be removed improving the efficiency of the solid washing with diluted acids.

An alternative way for recovering copper consists in putting the extraction solution under agitation at hot conditions, so to taking away ammonia that is present. In such a way, in condition of neutral pH, copper precipitates in the form of an oxide (CuO, black solid insoluble in water). Copper oxide can be sent as such to the industries working in the field of metal refining.

### Example 19. Recovery of gold in solution after selective dissolution of the metal contained in electronic waste and determination of its amount

The method developed consists in reducing gold contained in the extraction solution, in the present case the solution obtained from example 12 after metal extraction and separation of the solid residues, by means of addition of an excess of Mg in chips. The addition of magnesium under agitation at ambient temperature for about 12 hours, promotes the reduction of goldand iodine, the precipitation of Mgl₂ (white solid not very soluble in acetone), and the release of the ligand

In order to recover metallic gold, that can be found both as adhering to the magnesium surface and as bottom residue, it is necessary to divide it from the other solid that are present (excess of Mg and MgI₂) and from the solution that contains the ligand to be recovered. To this aim the solution is filtered: the solids are washed abundantly with water (in order to dissolve MgI₂) and with diluted HCl (in order to dissolve Mg), while mother liquors are conveyed to the step of recovery of ligand.

The ligand can be recovered by evaporating the solvent from the solution at a reduced pressure, washing the solid with water in order to extract MgI₂ residues and re-crystallizing the ligand from CH₂Cl₂/EtOH at hot conditions. The last passage is performed in the step of synthesis of the reactant, thus the washed solid residue obtained in this way, can be loaded together with the synthesis ligand to be purified and subsequently used for the extractions.

Theoretically the yelds of recovery of gold and ligand should be quantitative. Experimentally it was observed that, while in the case of the metal recovery a correspondence exists amongst the theoretic and experimental yeld (4,5 mg recovered from HP 15 black cartridges), in the case of ligand recovery some processes of degradation of the reactant intervenes, probably due to the strong affinity of magnesium and sulfur, reducing the yeld. At present, it was possible to obtain yelds of recovery of the ligand of about 60% (such a value referring to a recovery performed after reaction on gold in powder state using CH₃CN as solvent).

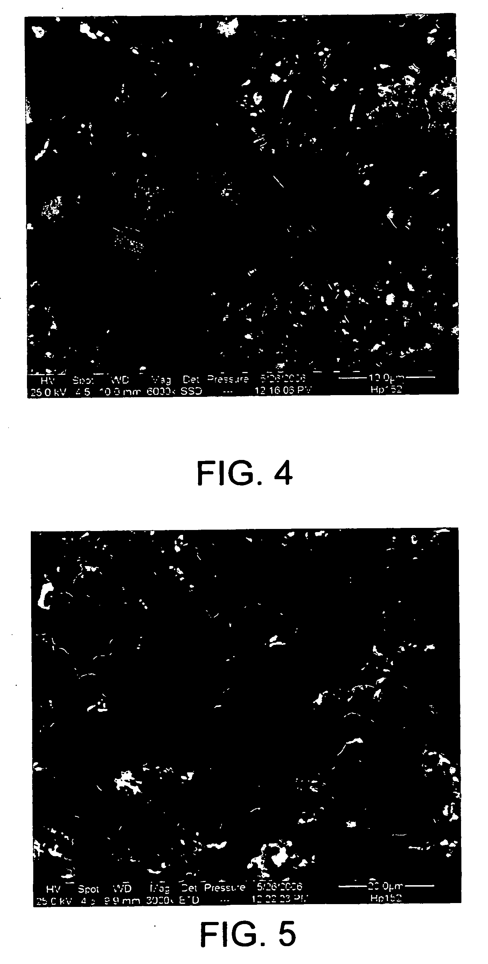

In the case of gold also the amount of the metal obtained was verified, in terms of purity, dimensions and omogeneity of the particles. To this aim the characterization of the obtained sample was performed, through energy dispersion spectrometry of the scanning electonic microscopy. Figures 4 and 5, obtained with SEM, show the morphology of the sample under exam: the form and the dimensions of the particles turns out to be strongly unhomogeneous, probably because of the fact that some of them grow adhering to the magnesium while some other precipitate independently. The dimensions of the mono particles are spread in the range 0,5-10 µm, and even aggregates of about 40 µm were observed. Through a microanalythic investigation it is established that the analized sample is essentially composed of metallic gold (~95%) and a minimum residual amount of Mg (~5%). The Mg residue can be removed improving the efficiency of the washing with diluted HCl.

### Example 20. Treatment of the milled materials of electronic waste

The process for recovering noble metals from electric and electronic waste according to the present invention can be applied in particular to another important type of material available on the market, known as milled electronic waste. In fact, for the purposes of the present invention, this milled material can be considered as a semifinished product ready for the separation of the different metals. It is not a case if this material is obtained by the milling of electronic waste of different kinds, which subsequently undergo a series of physical treatments for the preliminary separation of the glass and plastic materials, aluminium and magnetic metals, in order to obtain a product that is ready for the separation of noble metals on the base of the different processes for recovering such metals according to the prior art.

Due to its nature, this kind of starting material is strongly heterogeneous and its composition varies as a function of the different kinds of contained waste. In particular, analized samples had the following percentage average composition: Cu 79%, Sn 10%, Pb 7%, Zn 2%, Ni 0,5%, Ag 0,06%, Au 0,01 %, other metals (Al, Cr, Mn, Fe, Co, Cd) 1,43%.

The metal separation/dissolution procedure followed closely the steps reported in Examples 16 and 17 for electronic cards.

Step 1: Treatment with HCl (conc. 1:5-conc) at hot conditions in inert atmosphere (N₂ or Ar) monitoring the concentration of the species in particular of Pb²⁺, Sn²⁺ and Ni²⁺. This treatment leads to the quantitative dissolution of metals with negative reduction potential leaving noble metals in the residue (mainly Cu, Ag and Au) and inert material.

Step 2: Treatment with NH₃/(NH₄)₂SO₄/H₂O₂ at cold conditions monitoring the concentration of the species in particular of Cu²⁺. This treatment leads to the quantitative dissolution of copper and silver leaving gold and inert material in the residue. The solution can be treated for the recovery of copper.

Step 3: Dissolution of gold with the reactants and the method described in example 17.

The present invention was described for illustrative, non-limitative purposes, according to its preferred embodiments, but it is to be understood that variations and/or modification can be made by those skilled in the art without for these reasons escaping the pertinent scope of protection, as defined by the enclosed claims.

## Claims

1. Process for recovering noble metals from electric and electronic waste **characterized in that** it comprises the following steps:
- milling the waste,
- separating magnetic metals through the application of magnetic fields to the milled material,
- washing the milled material with solvents in order to impoverish it of the fraction of soluble plastic materials or materials that separate because of the density,
- selectively dissolutiing the metals of the milled material through a treatment with one or more subsequent solutions of metal dissolving compounds, starting from those with the smaller oxidation potential,
- separating by filtering the milled material from the solution that contains the dissolved metals,
- washing the milled material with an organic solvent selected amongst acetone, methylethylketone, acetonitrile and tetrahydrofuran,
- dissoluting noble metals through a treatment of the milled material with a solution of reactants selected amongst:
a) adducts with halogens of non cyclic dithioxiamides of formula (2)
Rₘ,Rₘ'DTO·nX₂ (2)
wherein:
R and R' are the same or different alkyls or aryls,
X₂ are the same halogen or inter-halogen,
m is 1 or 2, and
n is 1 or 2
b) adducts with halogens of tetralkylthiuram disulphide (Bis(diethylthiocarbamoyl)disulphide) of formula (3) 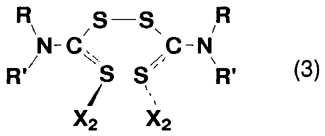 wherein:
R and R' are the same or different alkyls or aryls, and
X₂ are the same halogen or inter-halogen
c) adducts with halogens of dimorpholinthiuram disulphide (Bis(morpholinthiocarbamoyl) disulphide) with morpholine as the only substituent of the nitrogens, having formula (4) 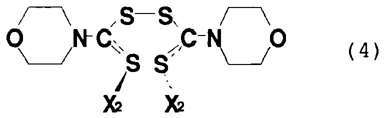 wherein X₂ are the same halogen or inter-halogen;
- separating by filtration of the solid residue from the solution that contains dissolved noble metals,
- precipitating gold through the addition to the solution of a reducing agent selected from metals with negative potential,
- separating by filtration the precipitated noble metals from the solution that contains the reactants,
- washing precipitated noble metals, and
- recovering reactants from the solution treated with the reducing metal, through evaporation of the solvent, washing with water the solid residue and recrystallization from a CH2Cl2/EtOH mixture at hot conditions.

2. Process according to claim 1, **characterized in that**, in the adducts of formula (2), R and R', which are the same or different, are short chain alkyls or aryls.

3. Process according to claim 1, **characterized in that**, in the adducts of formula (2), R and R' are the same and are methyls.

4. Process according to claim 1, **characterized in that**, in the adducts of formula (2), X₂ is selected amongst the group consisting of I₂, IBr, ICI, Br₂.

5. Process according to claim 1, **characterized in that**, in the adducts of formula (3), R and R', which are the same or different, are short chain alkyls or aryls.

6. Process according to claim 1, **characterized in that**, in the adducts of formula (3), R and R' are the same and are ethyls.

7. Process according to claim 1, **characterized in that**, in the adducts of formula (3), X₂ is selected amongst the group consisting of I₂, IBr, ICI, Br₂.

8. Process according to claim 1, **characterized in that**, in the adducts of formula (4), X₂ is selected amongst the group consisting of I₂, IBr, ICI, Br₂.

9. Process according to claim 1, **characterized in that** the step of selective dissolution of the metals of the milled material comprises the following sequence of substeps:
- treatment of the milled material with a solution of HCl (HCl 37% diluted 1:5 - 1:1) in inert atmosphere (N₂ or Ar), at a temperature compresed between ambient temperature and the solution boiling temperature, until the stabilization of the concentration of the metallic species in solution, and
- treatment of the milled material with a solution of NH₃ (range concentration: dil 1:5 - conc) to which (NH₄)₂SO₄ is added and, under agitation drop by drop, a solution at ambient temperature of H₂O₂ (10-30 vol) is further added.

10. Process according to claim 9, **characterized in that** the solution that contains the dissolved metals, after separation by filtration of the milled material is subjected to a treatment of extraction of copper comprising the following sequence of steps:
- acidification with diluted sulfuric acid,
- addition of an excess of zinc in powder state in order to precipitate copper,
- removal of the solid zinc in excess from the precipitate through washing with a diluted acid (H₂SO₄ or HCl).

11. Process according to claim 9, **characterized in that** the solution that contains the dissolved metals, after separation by filtration of the milled material is subjected to a treatment of extraction of copper providing for putting under agitation at hot conditions the extraction solution, so to taking away the ammonia present until reaching the condition of neutral pH, thus causing precipitation of copper in the form of an oxide (CuO).

12. Process according to claim 1, **characterized in that** said reducing agent used in said step of precipitation of gold is magnesium.

13. Process according to claim 1, **characterized in that** said step of washing precipitated noble metals is performed with acetone.

14. Process according to claim 1, **characterized in that** said step of recovering reactants from the solution treated with the reducing metal occurs re-crystallizing of a mixture CH₂Cl₂/EtOH at hot conditions.

15. Use of adducts with halogens of non cyclic dithioxiamides of formula (2), as defined in claims 1-4, as complexation reactants of noble metals.

16. Use of adducts with halogens of tetralkylthiuram disulphide (Bis(diethylthiocarbamoyl)disulphide) of formula (3), as defined in claims 1 and 5 - 7, as complexation reactants of noble metals.

17. Use of adducts with halogens of dimorpholinthiuram disulphide (Bis(morpholinthiocarbamoyl) disulphide) with morpholine as the only substituent of the nitrogens, of formula (4), as defined in claims 1 and 8, as complexation reactants of noble metals.

## Patentansprüche

1. Verfahren zur Rückgewinnung von Edelmetallen aus elektrischem und elektronischem Abfall, **dadurch gekennzeichnet, dass** es die folgenden Schritte umfasst:
- Zerkleinern des Abfalls,
- Abtrennen magnetischer Metalle, indem das zerkleinerte Material magnetischen Feldern ausgesetzt wird,
- Waschen des zerkleinerten Materials mit Lösungsmitteln, um es hinsichtlich der Fraktion von löslichen Kunststoffmaterialien oder Materialien, welche sich aufgrund der Dichte abtrennen, abzureichern,
- Selektives Lösen der Metalle des zerkleinerten Materials durch eine Behandlung mit einer oder mehreren aufeinanderfolgenden Lösung(en) von metalllösenden Verbindungen, beginnend mit denjenigen mit dem kleineren Oxidationspotenzial,
- Abtrennen des zerkleinerten Materials von der Lösung, welche die gelösten Metalle enthält, durch Filtrieren,
- Waschen des zerkleinerten Materials mit einem organischen Lösungsmittel, ausgewählt aus Aceton, Methylethylketon, Acetonitril und Tetrahydrofuran,
- Lösen von Edelmetallen durch eine Behandlung des zerkleinerten Materials mit einer Lösung von Reaktanten, welche ausgewählt sind aus:
a) Addukten von nicht-cyclischen Dithiooxamiden mit Halogenen der Formel (2)
**Rₘ,Rₘ'DTC)·nX₂** **(2)**
worin:
R und R' gleiche oder verschiedene Alkyl- oder Arylgruppen sind, X₂ gleiche Halogen- oder Interhalogengruppen sind,
m 1 oder 2 ist und
n 1 oder 2 ist,
b) Addukten von Tetraalkylthiuramdisulfid (Bis(diethyl-thiocarbamoyl)disulfid) mit Halogenen der Formel (3) 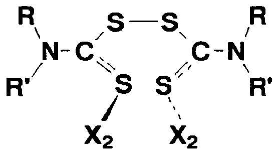 worin:
R und R' gleiche oder verschiedene Alkyl- oder Arylgruppen sind und X₂ gleiche Halogen- oder Interhalogengruppen sind.
c) Addukten von Dimorpholinthiuramdisulfid (Bis(morpholin-thiocarbamoyl)disulfid), mit Morpholin als einzigem Substituent der Stickstoffatome, mit Halogenen der Formel (4) 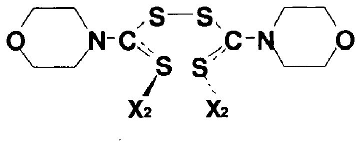 worin
X₂ gleiche Halogen- oder Interhalogengruppen sind;
- Abtrennen des festen Rests von der Lösung, welche gelöste Edelmetalle enthält, durch Filtrieren,
- Präzipitieren von Gold durch die Zugabe eines Reduktionsmittels, ausgewählt aus Metallen mit negativem Potential, zu der Lösung,
- Abtrennen der präzipitierten Edelmetalle von der Lösung, welche die Reaktanten enthält, durch Filtrieren,
- Waschen der präzipitierten Edelmetalle und
- Rückgewinnen von Reaktanten aus der Lösung, welche mit dem reduzierenden Metall behandelt wurde, durch Verdampfung des Lösungsmittels, Waschen des festen Rückstands mit Wasser und Umkristallisieren aus einer CH₂Cl₂/EtOH-Mischung unter heißen Bedingungen.

2. Verfahren nach Anspruch 1, **dadurch gekennzeichnet, dass** in den Addukten der Formel (2) R und R', welche gleich oder verschieden sind, kurzkettige Alkylgruppen oder Arylgruppen sind.

3. Verfahren nach Anspruch 1, **dadurch gekennzeichnet, dass** in den Addukten der Formel (2) R und R' gleich sind und Methyl darstellen.

4. Verfahren nach Anspruch 1, **dadurch gekennzeichnet, dass** in den Addukten der Formel (2) X₂ aus der Gruppe, die aus I₂, IBr, ICl, Br₂ besteht, ausgewählt ist.

5. Verfahren nach Anspruch 1, **dadurch gekennzeichnet, dass** in den Addukten der Formel (3) R und R', welche gleich oder verschieden sind, kurzkettige Alkylgruppen oder Arylgruppen sind.

6. Verfahren nach Anspruch 1, **dadurch gekennzeichnet, dass** in den Addukten der Formel (3) R und R' gleich sind und Ethyl darstellen.

7. Verfahren nach Anspruch 1, **dadurch gekennzeichnet, dass** in den Adukten der Formel (3) X₂ aus der Gruppe, die aus I₂, IBr, ICl, Br₂ besteht, ausgewählt ist.

8. Verfahren nach Anspruch 1, **dadurch gekennzeichnet, dass** in den Addukten der Formel (4) X₂ aus der Gruppe, die aus I₂, IBr, ICl, Br₂ besteht, ausgewählt ist.

9. Verfahren nach Anspruch 1, **dadurch gekennzeichnet, dass** der Schritt der selektiven Lösung der Metalle des zerkleinerten Materials die folgende Sequenz von Teilschritten umfasst:
- Behandlung des zerkleinerten Materials mit einer Lösung von HCl (37 %ige HCl, 1:5 - 1:1 verdünnt) in einer inerten Atmosphäre (N₂ oder Ar) bei einer Temperatur, die zwischen der Umgebungstemperatur und der Siedetemperatur der Lösung liegt, bis zur Stabilisierung der Konzentration der metallischen Spezies in Lösung, und
- Behandlung des zerkleinerten Materials mit einer Lösung von NH₃ (Konzentrationsbereich: 1:5 verdünnt bis konzentriert), wozu (NH₄)₂SO₄ zugegeben wird und ferner unter mechanischer Bewegung tropfenweise eine Lösung von H₂O₂ (10-30 Volumenprozent) bei Umgebungstemperatur zugegeben wird.

10. Verfahren nach Anspruch 9, **dadurch gekennzeichnet, dass** die Lösung, welche die gelösten Metalle enthält, nach Abtrennung durch Filtrieren des zerkleinerten Materials einer Behandlung zur Extraktion von Kupfer unterworfen wird, welche die folgende Sequenz von Schritten umfasst:
- Ansäuern mit verdünnter Schwefelsäure,
- Zugeben eines Überschusses an pulverförmigem Zink, um Kupfer zu präzipitieren,
- Entfernen des Überschusses an festem Zink aus dem Präzipitat durch Waschen mit einer verdünnten Säure (H₂SO₄ oder HCl).

11. Verfahren nach Anspruch 9, **dadurch gekennzeichnet, dass** die Lösung, welche die gelösten Metalle enthält, nach Abtrennung durch Filtrieren des zerkleinerten Materials einer Behandlung zur Extraktion von Kupfer unterworfen wird, wobei die Extraktionslösung unter heißen Bedingungen einer mechanischen Bewegung unterworfen wird, um das vorhandene Ammoniak zu entfernen, bis der Zustand eines neutralen pH-Werts erreicht wird, wodurch die Präzipitation von Kupfer in Form eines Oxids (CuO) veranlasst wird.

12. Verfahren nach Anspruch 1, **dadurch gekennzeichnet, dass** das im Schritt der Präzipitation von Gold verwendete Reduktionsmittel Magnesium ist.

13. Verfahren nach Anspruch 1, **dadurch gekennzeichnet, dass** der Schritt des Waschens der präzipitierten Edelmetalle mit Aceton durchgeführt wird.

14. Verfahren nach Anspruch 1, **dadurch gekennzeichnet, dass** in dem Schritt der Rückgewinnung von Reaktanten aus der Lösung, die mit dem reduzierenden Metall behandelt wurde, ein Umkristallisieren in einer Mischung von CH₂Cl₂/EtOH unter heißen Bedingungen stattfindet.

15. Verwendung von Addukten von nicht-cyclischen Dithiooxamiden mit Halogenen der Formel (2), wie in den Ansprüchen 1-4 definiert, als Komplexierungs-Reaktanten von Edelmetallen.

16. Verwendung von Addukten von Tetraalkylthiuramdisulfid (Bis(diethylthiocarbamoyl)disulfid) mit Halogenen der Formel (3), wie in Ansprüchen 1 und 5-7 definiert, als Komplexierungs-Reaktanten von Edelmetallen.

17. Verwendung von Addukten von Dimorpholinthiuramdisulfid (Bis(morpholinthiocarbamoyl)disulfid), mit Morpholin als einzigem Substituenten der Stickstoffatome, mit Halogenen der Formel (4), wie in Ansprüchen 1 und 8 definiert, als Komplexierungs-Reaktanten von Edelmetallen.

## Revendications

1. Procédé de récupération de métaux nobles à partir de déchets électriques et électroniques, **caractérisé en ce qu'**il comprend les étapes suivantes:
- broyage des déchets,
- séparation des métaux magnétiques par application de champs magnétiques au matériau broyé,
- lavage du matériau broyé à l'aide de solvants afin de l'appauvrir de la fraction de matières plastiques solubles ou de matières qui se séparent du fait de leur densité,
- dissolution sélective des métaux du matériau broyé par traitement à l'aide d'une ou de plusieurs solutions subséquentes des composés de dissolution des métaux, en commençant par ceux ayant un potentiel d'oxydation plus faible,
- séparation du matériau broyé de la solution qui contient les métaux dissous par filtration,
- lavage du matériau broyé à l'aide d'un solvant organique choisi parmi l'acétone, la méthyléthylcétone, l'acétonitrile et le tétrahydrofuranne,
- dissolution des métaux nobles par traitement du matériau broyé à l'aide d'une solution de réactifs choisis parmi:
a) les produits d'addition avec des halogènes de dithioxiamides non cycliques de formule (2)
Rₘ,Rₘ'DTO·nX₂ (2)
dans laquelle:
R et R' sont des groupes alkyle ou aryle identiques ou différents,
les X₂ représentent le même halogène ou inter-halogène,
m est égal à 1 ou 2, et
n est égal à 1 ou 2
b) les produits d'addition avec des halogènes de disulfure de tétraalkylthiuram (disulfure de bis(diéthylthiocarbamoyle)) de formule (3) 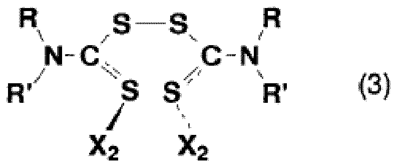 dans laquelle:
R et R' sont des groupes alkyle ou aryle identiques ou différents, et
les X₂ représentent le même halogène ou inter-halogène,
c) les produits d'addition avec des halogènes de disulfure de dimorpholinethiuram (disulfure de bis(morpholinethiocarbamoyle)) avec la morpholine comme seul substituant des atomes d'azote, répondant à la formule (4) 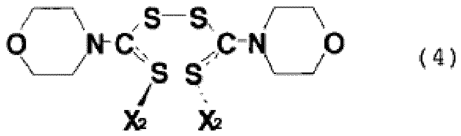 dans laquelle les X₂ représentent le même halogène ou inter-halogène,
- séparation du résidu solide de la solution qui contient les métaux nobles dissous par filtration,
- précipitation de l'or par addition à la solution d'un agent réducteur choisi parmi les métaux ayant un potentiel négatif,
- séparation des métaux nobles précipités de la solution qui contient les réactifs par filtration,
- lavage des métaux nobles précipités, et
- récupération des réactifs à partir de la solution traitée à l'aide du métal réducteur, par évaporation du solvant, lavage à l'eau du résidu solide et recristallisation à partir d'un mélange CH₂Cl₂/EtOH dans des conditions chaudes.

2. Procédé selon la revendication 1, **caractérisé en ce que**, dans les produits d'addition de formule (2), R et R', qui sont identiques ou différents, sont des groupes alkyle ou aryle à chaîne courte.

3. Procédé selon la revendication 1, **caractérisé en ce que**, dans les produits d'addition de formule (2), R et R' sont identiques et sont des groupes méthyle.

4. Procédé selon la revendication 1, **caractérisé en ce que**, dans les produits d'addition de formule (2), X₂ est choisi parmi le groupe constitué par I₂, IBr, ICI, Br₂.

5. Procédé selon la revendication 1, **caractérisé en ce que**, dans les produits d'addition de formule (3), R et R', qui sont identiques ou différents, sont des groupes alkyle ou aryle à chaîne courte.

6. Procédé selon la revendication 1, **caractérisé en ce que**, dans les produits d'addition de formule (3), R et R' sont identiques et sont des groupes éthyle.

7. Procédé selon la revendication 1, **caractérisé en ce que**, dans les produits d'addition de formule (3), X₂ est choisi parmi le groupe constitué par I₂, IBr, ICI, Br₂.

8. Procédé selon la revendication 1, **caractérisé en ce que**, dans les produits d'addition de formule (4), X₂ est choisi parmi le groupe constitué par I₂, IBr, ICI, Br₂.

9. Procédé selon la revendication 1, **caractérisé en ce que** l'étape de dissolution sélective des métaux du matériau broyé comprend la succession de sous-étapes suivante:
- traitement du matériau broyé à l'aide d'une solution de HCl (HCl 37% dilué 1:5 - 1:1) dans une atmosphère inerte (N₂ ou Ar), à une température comprise entre la température ambiante et la température d'ébullition de la solution, jusqu'à la stabilisation de la concentration de l'espèce métallique dans la solution, et
- traitement du matériau broyé à l'aide d'une solution de NH₃ (intervalle de concentration: dil. 1:5 - conc.) auquel on ajoute du (NH₄)₂SO₄ et, sous agitation, on ajoute en outre goutte-à-goutte, une solution à température ambiante de H₂O₂ (10-30 vol).

10. Procédé selon la revendication 9, **caractérisé en ce que** la solution qui contient les métaux dissous est soumise, après séparation par filtration du matériau broyé, à un traitement d'extraction du cuivre comprenant la succession d'étapes suivante:
- acidification avec de l'acide sulfurique dilué,
- addition d'un excès de zinc à l'état de poudre afin de précipiter le cuivre,
- élimination du zinc solide en excès du précipité par lavage avec un acide dilué (H₂SO₄ ou HCl).

11. Procédé selon la revendication 9, **caractérisé en ce que** la solution qui contient les métaux dissous est soumise, après séparation par filtration du matériau broyé, à un traitement d'extraction du cuivre prévoyant le placement sous agitation de la solution d'extraction dans des conditions chaudes, de manière à éliminer l'ammoniac présent jusqu'à atteindre la condition de pH neutre, provoquant ainsi la précipitation du cuivre sous forme d'un oxyde (CuO).

12. Procédé selon la revendication 1, **caractérisé en ce que** ledit agent réducteur utilisé dans ladite étape de précipitation de l'or est le magnésium.

13. Procédé selon la revendication 1, **caractérisé en ce que** ladite étape de lavage des métaux nobles précipités est réalisée à l'aide d'acétone.

14. Procédé selon la revendication 1, **caractérisé en ce que** ladite étape de récupération des réactifs à partir de la solution traitée à l'aide du métal réducteur s'opère par recristallisation d'un mélange CH₂Cl₂/EtOH dans des conditions chaudes.

15. Utilisation des produits d'addition avec des halogènes de dithioxiamides non cycliques de formule (2), tels que définis dans les revendications 1-4, comme réactifs de complexation des métaux nobles.

16. Utilisation des produits d'addition avec des halogènes de disulfure de tétraalkylthiuram (disulfure de bis(diéthylthiocarbamoyle)) de formule (3), tels que définis dans les revendications 1 et 5 - 7, comme réactifs de complexation des métaux nobles.

17. Utilisation des produits d'addition avec des halogènes de disulfure de dimorpholinethiuram (disulfure de bis(morpholine-thiocarbamoyle)) avec la morpholine comme seul substituant des atomes d'azote, répondant à la formule (4), tels que définis dans les revendications 1 et 8, comme réactifs de complexation des métaux nobles.
